# EUROPÄISCHE PATENTSCHRIFT

(11) **EP 0 782 553 B1**
(45) Veröffentlichungstag und Bekanntmachung des Hinweises auf die Patenterteilung: **16.04.2003**
(21) Anmeldenummer: 95931364.4
(22) Anmeldetag: 22.09.1995
(51) Int. Cl.: C04B 28/32, E04C 2/38, B28B 7/36, B28B 7/00, E04F 13/08

(54) **BODENFLIESE UND VERFAHREN ZU IHRER HERSTELLUNG**
FLOORING TILE AND METHOD FOR ITS PRODUCTION
CARRELAGE ET PROCEDE POUR SA PRODUCTION

(30) Priorität: 22.09.1994 AT 179994; 22.09.1994 AT 180094; 04.08.1995 CH 225795
(43) Veröffentlichungstag der Anmeldung: 09.07.1997
(73) Patentinhaber: MÜLLER-HARTBURG, Johannes, 3011 Untertullnerbach (AT)
(72) Erfinder: MÜLLER-HARTBURG, Johannes, 3011 Untertullnerbach (AT)
(74) Vertreter: Rosenich, Paul, Dipl.-Ing.
(86) Internationale Anmeldenummer: IB9500787
(87) Internationale Veröffentlichungsnummer: WO96009262

(56) Entgegenhaltungen:
- WO-A-92/17414
- DE-A- 2 264 835
- DE-A- 2 526 598
- DE-A- 3 031 086
- DE-A- 3 915 628
- GB-A- 897 895
- GB-A- 1 294 314
- GB-A- 2 036 839
- US-A- 4 150 185
- US-A- 4 419 196
- CHEMICAL ABSTRACTS, vol. 119, no. 2, 12. Juli 1993, Columbus, Ohio, US; abstract no. 14203f, & CN,A,1 067 401 (FAMING ZHUANLI SHENQING GONKAI SHUOMINGSHU)

## Beschreibung

Gegenstand dieser Patentanmeldung ist ein neuartiger, plattenförmiger Fussbodenbelag nach dem Oberbegriff des Anspruches 1. Dieser Bodenbelag soll im Gebrauch einen dichten und hochästhetischen, anspruchsvollen Belag bilden.

Aufgabe der Erfindung ist es, ein Bauelement anzugeben, bei dem ein Beschädigen der Kanten nicht leicht möglich ist und eine Vielzahl von Materialien zur Herstellung verwendet werden kann, insbesondere solche, die sich sonst aufgrund von mangelnder Kantenfestigkeit dafür ursprünglich nicht eignen. Auch soll ein Bauelement angegeben werden, das vorfabriziert auf einfache Weise von Oberflächenkratzern oder -löchern durch Abschleifen befreit werden kann.

Erfindungsgemäss wird dies bei einer Bodenfliese der eingangs genannten Art durch die im Kennzeichen des Anspruches 1 angeführten Merkmale erreicht. Weiterbildungen der Erfindung, sowie ein Verfahren zur Herstellung der erfindungsgemässen Bodenfliese sind in den abhängigen Ansprüchen beschrieben.

Nun beschreibt die GB-A-2036839 die Herstellung von Platten ohne Verwerfungen entweder durch Zugabe von Holzspänen zum Brei aus Magnesiumzement oder durch Einsatz von Verstärkungseinlagen ("honeycomb type layers"). Für die dort beschriebene Türfüllung stellt sich das Problem des Kantenbruchs nicht. Ziel ist es dort, Magnesiumzement wegen seiner feuerfesten Eigenschaften selbst an den Plattenrändern einzusetzen. Dass Schrauben in die Plattenränder einziehbar sind, gibt keinen Hinweis auf ausreichende Kantenfestigkeit, wie sie für Bodenfliesen gefordert wird.

Die DE-A-3915628 beschreibt die Verankerung eines nichttragenden Wandelements in einem Fachwerk, wobei die Druckkräfte vom Tragwerk aufgenommen werden. Das Bauelement ist um ein Vielfaches dicker (14-er Balken!) als eine Bodenfliese. Dort treten somit keine Verwerfungen auf bzw. sie sind kein Problem, da die Ausfachung verputzt oder mit Gipsplatten verschalt wird.

Erfindungsgemäss wird die Füllung am Rand durch den Rahmen gegen Beschädigung geschützt und in ihrer Form gehalten, so dass auch Füllungen verwendet werden können, die sonst beim Aushärten Verwerfungen bilden. Ein Absplittern an der bzw. ein Zerkratzen der Oberfläche kann durch einfaches Abschleifen des Bauelements beseitigt werden, wobei Rahmen und Füllung zugleich plangeschliffen werden können.

In weiterer Ausbildung der Erfindung kann vorgesehen sein, dass der Füllung Farbpigmente beigemischt sind. Dadurch wird eine durchgehende Färbung der Füllung erreicht, so dass bei Kratzern oder bei Absplitterungen an der Oberfläche sowie beim Abschleifen der Bauelemente die Farbe der Füllungsoberfläche erhalten bleibt.

Die erfindungsgemässen Vertiefungen erhöhen die Kontaktfläche zwischen Rahmen und Füllung, wodurch eine stark belastbare Verbindung hergestellt wird und die Füllung an den Rändern weniger leicht ausbricht.

Die halbkreis- oder dreiecksförmige Ausbildung der Vertiefung ergibt eine besonders innige Verbindung zwischen Rahmen und Füllung, so dass eine Trennung der beiden durch die Benutzungsbelastungen sicher vermieden wird.

Ein an der der Füllung zugekehrten Seite des Rahmens eingesetztes Gitter, das sich über die gesamte Rahmeninnenfläche innerhalb der Füllung erstreckt, ergibt eine starke Verbindung zwischen Rahmen und Füllung, verstärkt das Füllmaterial und ergibt eine erhöhte Belastbarkeit. Bevorzugt werden das Gitter, die Netze, Fasern o.dgl. in die Zugzone, z.B. im unteren Drittel der Gesamtstärke der Platte, gelegt.

Die feste Verbindung zwischen Füllung und Rahmen kann durch Eingiessen der Füllung in den Rahmen, aber auch durch nachträgliches Ankleben des Rahmens an der vorgefertigten Füllung erfolgen bzw. durch Einkleben bzw. Eingiessen einer dünnen Füllungsplatte bzw. Füllmasse in einen Rahmen auf einer Grundplatte oder in eine ausgefräste Platte. Geeignete Klebstoffe für Holz und z.B. Steinholz können sein: Sorelzement, Wasserglas-Kasein-Kleber, Zinkzement, PU-Kleber und ähnliches.

Die Füllung aus Beton, z.B. Leichtbeton erlaubt eine kostengünstige Herstellung, eine solche aus Kunststoff eine besonders leichte Pflege der erfindungsgemässen Bodenfliese ; sie zeichnet sich bei entsprechender Materialwahl auch durch eine sehr gute Witterungsbeständigkeit aus.

Die Füllung aus Holzbeton ergibt ein besonders gut wärmedämmendes und leichtes Bauelement. Durch den Rahmen ist dieses für Beschädigungen an Kanten sehr anfällige Material sehr gut geschützt und gegen Verwerfungen gesichert.

Die Füllung aus Steinholz ergibt hohe Wärmedämmung und hohe Festigkeit. Durch den Rahmen um diese Füllung wird ein sonst auftretendes Verwerfen des Bauelements verhindert. Steinholz kann weiters auch gut abgeschliffen werden, um das Bauelement von Oberflächenkratzern oder Löchern zu befreien. Weiters wird ein Ausbrechen der Kanten verhindert.

Ein Rahmen aus Holz ergibt gute baubiologische Voraussetzungen für die erfindungsgemässen Bodenfliesen, die aus den wärmedammenden und feuchtigkeitsregulierenden Eigenschaften von Holz resultieren.

Ein Rahmen aus Metall oder Stein ermöglicht sehr stabile Boden-. fliesen , deren Rahmen insbesondere im Falle von Metall auch leicht einstückig hergestellt werden kann.

Ein Rahmen aus Kunststoff ist sehr witterungsbeständig und auf einfache und kostengünstige Weise herstellbar.

Im folgenden wird die Erfindung anhand von Ausführungsbeispielen und unter Zuhilfenahme der Zeichnungen näher erläutert. Es zeigen:
- Fig.1: eine Draufsicht einer Ausführungsform einer erfindungsgemässen Bodenfliese;
- Fig.2 bis 5: einen Querschnitt durch je eine weitere erfindungsgemässe Ausführungsform; und
- Fig.6: eine Draufsicht auf eine weitere erfindungsgemässe Ausführungsform.

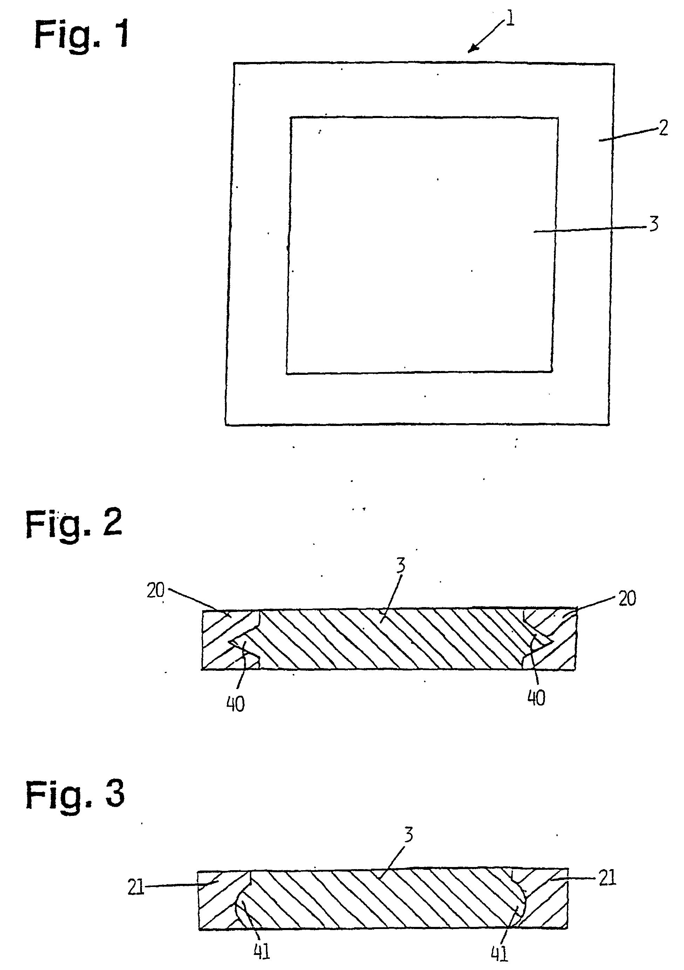

Fig.1 zeigt ein Ausführungsbeispiel der erfindungsgemässen Bodenfliese. Ein Rahmen 2 umgibt eine Füllung 3, wobei der Rahmen 2 und die Füllung 3 unlösbar zu einem einstückigen Teil verbunden sind. Eine solcherart hergestellte Bodenfliese kann je nach Beschaffenheit der Füllung und des Rahmens auf übliche Art auf den unterschiedlichsten Flächen verlegt werden. Die hier in quadratischer From abgebildete Bodenfliese kann im Rahmen der Erfindung auch in verschiedenen anderen Formen ausgebildet sein, als Rechteck, als n-Eck, in Kreisform, oval oder in jeder anderen flächigen Form.

Die Erfindung umfasst aber auch intarsienartige Einlagen unterschiedlicher Materialien in einem Füllungsmaterial, das durch einen Rahmen umgeben ist, so dass es durch Formschlüssigkeit vergleichbar jener an der Innenkante des aussen umgebenden Rahmens zu einem guten Halt der eingelegten Materialien bzw. Formen kommt.

Die Materialien für Rahmen und Füllung werden unterschiedlich gewählt, wobei die Rahmenfunktion in der Regel ein zäheres, widerstandsfähiges Material verlangt, um auch als Kantenschutz zu fungieren.

Die Füllung kann entweder eine vorgefertige Platte sein, kann aber ebenso aus einer Reihe von giessfähigen Substanzen bestehen, die im Rahmen aushärten. Das Material des Rahmens kann so ausgewählt werden, dass es zum Unterschied von der Füllung be-sonders gut bearbeitbar ist (z.B.Nut und Feder für die seitliche Verbindung von benachbarten Elementen untereinander - vergleichbar mit herkömmlichen Parkettböden).

In Fig.2 weist der Querschnitt des Rahmens 20 eine dreieckförmige Vertiefung 40 auf, die vorzugsweise in allen Rahmenteilen, gegebenenfalls zusammenhängend, angebracht ist. Die Füllung 3 füllt diese Vertiefung 40 vollständig aus.

Nach Fig.3 ist die halbkreisförmige Vertiefung 41 auf der der Füllung 3 zugekehrten Seite eines Rahmens 21 vorgesehen, so dass die Füllung in diese Vertiefung eindringen und den formschlüssigen Kontakt mit dem Rahmen 21 intensivieren kann.

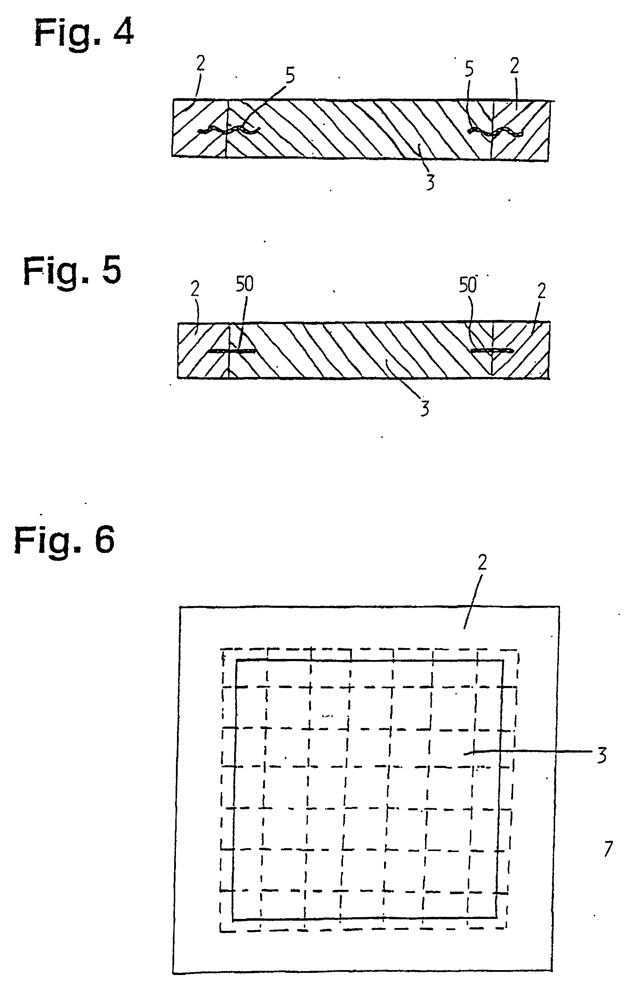

In Fig.4 ist in einem rechteckigen Rahmen 2 ein Wellblechstreifen 5 vorgesehen, der aus der der Füllung 3 zugekehrten Seite des Rahmens 2 in die Füllung 3 ragt und dort eine Verstärkung der Verbindung von Rahmen 2 und Füllung 3 bewirkt. Die Blechstreifen können jedoch auch anders strukturiert oder glatt sein; sie sind gegebenenfalls auch durch andere Materialien als Blech, wie z.B. Kunststoff, Vliese o.dgl. ersetzbar.

In Fig.5 sind noch Metallstifte 50 gezeigt, die in den Rahmen 2 umlaufend beabstandet eingesetzt sind, in die Füllung 3 ragen und ebenfalls zur innigen Verbindung von Füllung 3 und Rahmen 2 dienen. Die Metallstifte 50 können zylindrisch oder auch mit strukturierter Oberfläche ausgebildet sein, etwa durch Verdrillen, wodurch ein sehr guter Kontakt zwischen Füllung und Stahlstift erzeugt wird. Anstelle von Metallstiften sind andere Stifte mit gewisser Festigkeit verwendbar.

Gemäss Fig.6 ist ein Gitter 7 an der der Füllung 3 zugekehrten Seite des Rahmens 2 eingesetzt, welches sich über die gesamte Rahmeninnenfläche und innerhalb der Füllung 3 erstreckt. Dadurch wird zusätzlich eine grössere Stabilität der Füllung 3 selbst erreicht. So etwa, wenn eine Beton- oder Steinholzfüllung durch ein Gitter aus Stahl, Glasfasern oder Kunststoff verstärkt wird. Eine Variante ergibt sich, wenn der Rahmen sandwichartig aufgebaut ist und das Gitter o.dgl. zwischen den Rahmenteilen eingeklemmt bzw. befestigt ist.

Die Erfindung betrifft weiters ein Verfahren für die Herstellung einer Bodenfliese mit einer Füllung aus flüssigen bis teigigen, abbindbaren Massen, insbesondere hydraulisch abbindbaren Massen, wie z.B. Magnesitbindungen, insbesondere Steinholz mit Sorelzement, Weisszement, Beton o.dgl. Die Herstellung und der Transport solcher Fliesen, vor allem dann, wenn die Füllung noch nicht vollständig ausgetrocknet ist, stellt ein Problem dar, zumal z.B. Steinholz als breiige, feuchte Masse eingebracht wird und erst aushärten muss, bis es transportierbar bzw. weiterbearbeitbar ist. Das bringt einige Probleme mit sich, da das Wasser unter Umständen aus der Masse austritt und in Spalten - z.B. zwischen den Holzrahmen und einer Liegefläche, auf der der Rahmen aufliegt - einfliesst. Dabei können nachteiligerweise einerseits Farbstoffe ausgeschwemmt werden, andererseits kann das Holz des Rahmens Schaden, z.B. eine Verfärbung nehmen. Zudem fehlen das derart abfliessende Wasser und allfällig darin gelöste Stoffe der Mischung, so dass es zu einer mangelnden Aushärtung, zu Inhomogenitäten oder zu sonstigen Fehlern bei der Füllung kommen kann.

Darüber hinaus wird von vorgefertigten Platten verlangt, dass sie beidseitig gleich ausgehärtet und eben sind. Mit herkömmlichen Methoden konnte dies nicht erreicht werden, da das Wasser aus der breiigen Mischung an der Oberfläche schneller verdunstete als an der Unterseite der Liegefläche, die im wesentlichen von Luft abgeschlossen ist.

Aufgabe der Erfindung ist es daher auch, ein Verfahren zu schaffen, bei dem möglichst ökonomisch Platten aus den erwähnten Materialien hergestellt werden können. Insbesondere soll eine Möglichkeit gefunden werden, mit der man homogene, flächenförmige Bodenfliesen herstellen kann, bei denen eine optimale und verzugsfreie Aushärtung der Füllung erreicht wird. Bevorzugt sollen durch eine Weiterbildung des Verfahrens an den Bodenfliesen auch einfach Reliefs anbringbar sein.

Weiter soll in einem davon unabhängigen Erfindungsschritt eine Lösung für den Transport von halbfertigen Platten innerhalb des Herstellbetriebes von einer Arbeitsstelle zur nächsten gefunden werden.

Gelöst werden diese Aufgaben durch die im kennzeichnenden Teil des Anspruches 6 aufgelisteten Merkmale. Weiterbildungen dieses Verfahrens sind in den Ansprüchen 7 bis 9 beschrieben So wird eine optimale Aushärtung erreicht, weil Materialverwerfungen, bedingt durch unterschiedlich ablaufende chemische Härtungsreaktionen und ungleiche Aushärtegeschwindigkeiten der Unter- bzw. Oberseite der Platte hintangehalten werden. Der optimale Zeitpunkt für das Aufstellen des Rahmens mit seiner Füllung ergibt sich erfindungsgemäss nach dem ersten (chemischen) Abbindevorgang, bei dem das plattenförmige Material erstmals genügend Eigenstabilität erreicht hat, um sich beim Aufstellen in die Senkrechte nicht mehr zu verformen. Die Trennmatte vermeidet, dass sich die Füllung mit der Liegefläche verbindet (verklebt). Die Elastizität der Trennmatte führt dabei auch zu einer Abdichtung der Innenkante und der Aufliegefläche des Rahmens gegenüber der breiigen Füllung bzw. gegenüber der in der breiigen Füllung enthaltenen Flüssigkeit, da der Rahmen durch geeigneten Aufspanndruck geringfügig in die Matte eindringt. Somit werden die oben angegebenen Nachteile durch Flüssigkeitsverlust über die Rahmenkante hinaus vermieden.

Nach dem Aufstellen in die Senkrechte wird diese Trennmatte entfernt, so dass Luft gleichmässig beide Seiten der Füllung erreicht und diese somit gleichmässig austrocknen kann. Nach dem zweiten Aushärtevorgang (Trocknung) in der senkrechten Position werden die Platten gegebenenfalls geschliffen und danach mit Firnis, Lack, Öl, Kunstharz oder dergleichen imprägniert, vorzugsweise in einem Tauchbad oder einer Hochdruckimprägnieranlage, ev. nach einem VPI-Verfahren (Vakuum Pressure Impregnation).

Zum Niederhalten des Rahmens während des Befüllvorganges eignet sich bevorzugt eine Vakuumsaugplattenvorrichtung, die den Rahmen ansaugt und ihn dadurch gegen die Liegefläche presst, so dass der Abdichteffekt zwischen Trennmatte und innerer Rahmenkante - wie oben beschrieben - auftritt. Diese Saugvorrichtung besteht aus einem evakuierbaren Hohlkörper bzw. einer Platte aus steifem, tragfähigem Material, z.B. aus Metall oder aus glas- oder kohlenstofffaserverstärktem Material, und verfügt über gleichmässig verteilte Saugbohrungen an der Oberseite. Die Oberseite könnte alternativ auch mit einer elastischen Schicht, z.B. aus Gummi, beschichtet sein, wobei die steife Oberseite der Saugvorrichtung inklusive der Beschichtung durchgehend perforiert ist.

Auf die perforierte Platte der ersten Variante kommt im Betriebsfall vor dem Auflegen der Rahmen eine Gummimatte, die einerseits die Funktion der Trennmatte übernimmt und andererseits nur in Bereichen der aufzulegenden Rahmen so ausgeschnitten wird, dass ein entsprechend aufgelegter Rahmen (Rahmenfries) mit seiner Unterseite an allen Kanten auf der Gummimatte aufliegt, sowie durch verbleibende Hohlräume in der Gummimatte mittels Saugluft aus der Perforierung angesaugt und gegen die Gummimatte gepresst wird. Dabei ist es zwar vorteilhaft, aber nicht unbedingt erforderlich, dass die ausgeschnittenen Stellen geometrisch exakt mit der Projektion des Rahmens übereinstimmen; die ausgeschnittenen Stellen dürfen nur nicht die Rahmenkanten überragen. Es ist beispielsweise auch denkbar, dass im Bereich des Rahmens grössere Löcher in die Gummimatte gestanzt werden. Anstelle von Gummi können jedoch auch beliebige andere elastische Materialien gewählt werden. Weiche Kunststoffe bzw. Kunststofffolien können auch als Einmalfolien gewählt werden, während die Gummimatten aus Kostengründen wiederverwertet werden sollen.

Im Falle der zweiten Variante mit einer Gummibeschichtung wird eine zweite elastische Folie vorgesehen und dort, entweder wie oben beschrieben, ausgeschnitten oder etwas grösser ausgeschnitten, so dass die Rahmen vollständig in die Ausschnitte eingesetzt werden können. Gummi auf Gummi bewirkt ein sehr gutes Abdichten. Bei dieser Variante genügt es auch, die Rahmen auf die Gummibeschichtung aufzulegen und anschliessend eine dünne, den Innenabmessungen der Rahmen entsprechende Folie als Trennmatte bzw. -folie in diese von oben einzulegen.

Zur Erhöhung der Dichtheit zwischen der Trennmatte und dem Rahmen kann letzterer auch nach einem weiteren erfindungsgemässen Gedanken zuvor mit Lack o.dgl., z.B. Schellack, beschichtet bzw. imprägniert werden und daher eine glatte, mit Vakuum gut ansaugfähige Oberfläche aufweisen. Die Imprägnierung verhindert ausserdem das Eindringen von Wasser und allfälligen, im Wasser gelösten Farbpigmenten aus der Füllung in das Holz des Rahmens.

Die aufgelegte Gummi- bzw. Trennmatte kann im Bereich des Rahmens leicht abgesetzt oder bevorzugt so elastisch sein, dass sich der Rahmen vertieft eindrückt und die Füllung gegenüber dem Rahmen somit etwas zurückspringt. Dadurch wird optimal das Entstehen von Einschlüssen oder Materialüberläufen zwischen Trennmatte und Rahmen vermieden. Auch eine zum exakten Schleifen nötige Bezugsfläche entsteht. Beim anschliessenden Schleifen entstehen somit einwandfreie Übergänge zwischen Füllung und Rahmen. Ein Flüssigkeitsverlust entlang der Rahmen wird dadurch ebenfalls vermieden.

Die Trennmatte kann im Bereich der Füllung Reliefs o.dgl. aufweisen, um eine reliefartige Oberfläche der Platte zu erreichen. Natürlich sind unter Relief auch Noppen, Nuten und Perforationen zu verstehen.

Mit der beschriebenen Vakuumsaugplattenvorrichtung kann der aufgelegte Rahmen oder die bereits fertig vergossene Platte problemlos von einer Arbeitsstelle zur nächsten transportiert werden. Vorteilhaft ist dabei, wenn der evakuierbare Hohlraum mittels Absperrhahn nach aussen abgeschlossen werden kann, so dass er in evakuiertem Zustand verbleibt, selbst wenn er vom Vakuumanschluss zu Transportzwecken entfernt wird.

Günstig ist bei der Plattenherstellung das Ablösen der Trennmatte zu einem Zeitpunkt, zu dem die Füllung noch nicht fest abgebunden hat, also selbst noch über Feuchtigkeit bzw. Nässe verfügt. Dieser Zeitpunkt ist nach der ersten chemischen Abbindung erreicht.

Gut lassen sich Silikon oder Naturkautschukfolien mit einer Dicke von ca. 0,7-1 mm anwenden. Grundsätzlich ist das Herstellen von Sorelzementplatten mit Folien schon bekannt, jedoch dienen die Folien dort der Schaffung einer Verbundplatte, indem die Folien am Zement verbleiben. Solches ist beschrieben in der DE-B-2522515.

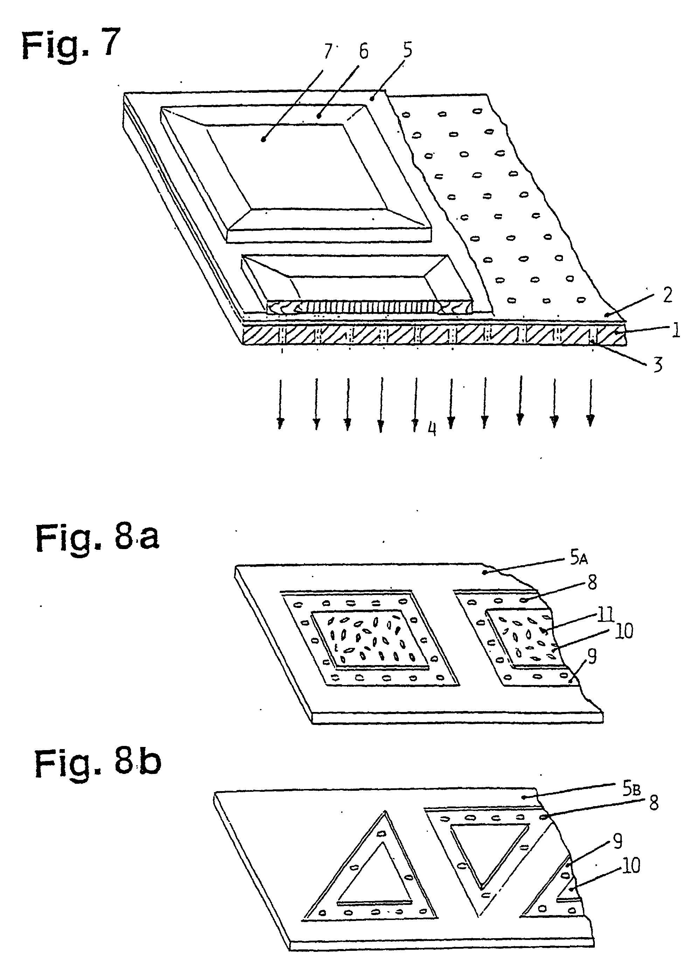

- Fig.7: zeigt einen Teil der Haltevorrichtung für Rahmen, nämlich eine Vakuumsaugplattenvorrichtung mit aufgelegter, bereits vergossener Platte;
- Fig.8a und b: zeigen zwei Varianten von Gummimatten zum Auflegen auf die Vakuumsaugplattenvorrichtung nach Fig.7;

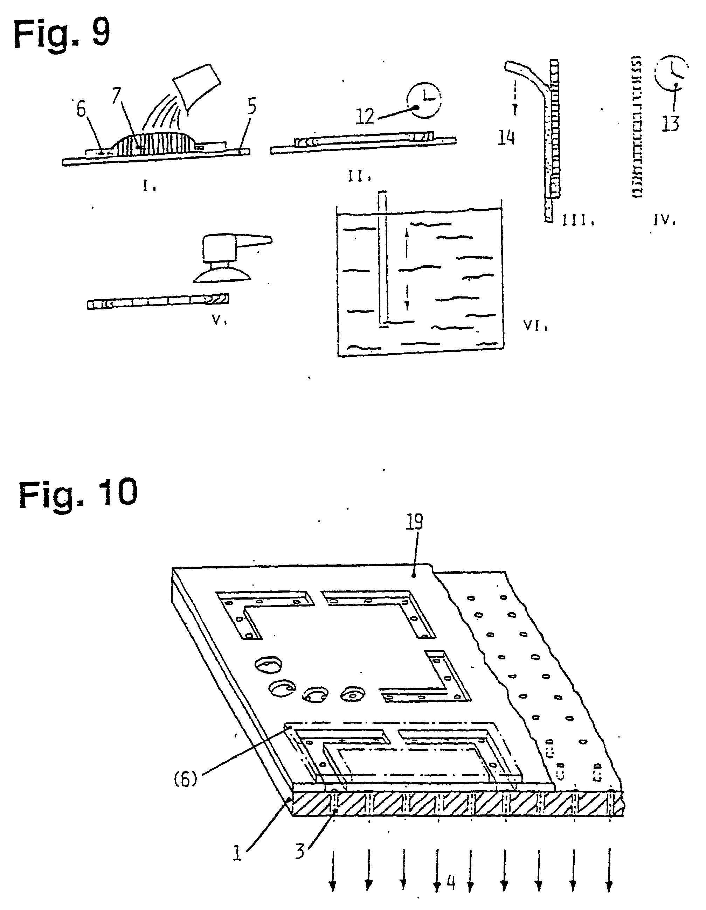

- Fig.9: zeigt die Arbeitsschritte I. bis VI. vom Einfüllen der noch breiigen Füllung bis zum Imprägnieren in symbolischer Darstellung;
- Fig.10: zeigt eine bevorzugte Variante einer Saugplatten-Vorrichtung mit siebartigen Bohrungen, die auch in wesentlich kleineren Dimensionen und grösserer Häufigkeit angeordnet sein können, zum Aufspannen von Rahmen mit nur einer elastischen Trennmatte und symbolisch dargestellten, unterschiedlichen, flächigen und lochartigen Ausnehmungen;

Fig.7 zeigt den oberen Teil der Vakuumsaugplattenvorrichtung mit einem Hohlkörper bzw. hohler Platte mit bereits aufgelegtem und vergossenem Rahmen. Die Platte 1, an deren Unterseite ein luftdichter - nicht dargestellter. - Raum mit einem Vakuumanschluss und Absperrventil ausgebildet ist, ist mit einer elastischen Schicht 2, z.B. einer Gummiplatte, beschichtet. Die beschichtete Platte 1,2 enthält über die ganze Fläche verteilt Bohrungen 3. Auf der Unterseite der Platte, bzw. im Inneren des Hohlkörpers, wird nun ein Vakuum 4 erzeugt. Ein Gegenstand, z.B. eine Glasplatte, eine Gummimatte bzw. die Trennmatte oder der Rahmen 6, werden dadurch angesaugt. Durch das Verschieben der gesamten Haltevorrichtung lässt sich so ein Element problemlos transportieren.

Zum Giessen der Plattenelemente darf nur der Rahmen 6 angesaugt werden. Zu diesem Zweck wird eine weitere Gummiplatte 5 (Fig.8) auf die elastische Schicht 2 aufgelegt, welche nur im Bereich des Rahmens 6 Bohrungen 8 enthält oder dem Rahmen ähnlich dort ausgeschnitten ist. Aus dem Innern der Haltevorrichtung werden die Gummiplatte bzw. Matte 5, die auch als Trennmatte dient und ebenso der Rahmen 6, der obenauf liegt, dichtend angesaugt. Das Füllmaterial 7 kann nun eingegossen werden.

Fig.8 zeigt zwei von diversen Varianten (5a,b) der Gummimatte 5, auf die der Rahmen 6 aufgelegt wird. Die Variantenvielfalt ist immens, da die Gummiplatten 5 im Füllbereich 10 mit oder ohne Reliefs 11 ausgeführt sein können. Für die Reliefs sind die verschiedensten Muster denkbar. Ebenfalls ist die Form des Rahmens 6 beliebig variierbar und somit auch die Form der Aussparung 9 zum Einlegen des Rahmens. Zum Ansaugen des Rahmens 6 verfügt die anvulkanisierte oder angeklebte Gummiplatte in der Auflagefläche 9 über Bohrungen 8, welche mit Bohrungen 3 der Haltevorrichtung übereinstimmen.

Fig.9 zeigt der Reihe nach die notwendigen Arbeitsschritte bis zur fertigen Bodenfliese:
I. Eingiessen der noch breiigen Masse 7, z.B. aus Steinholz oder ähnlichem, in den auf der Haltevorrichtung fixierten Rahmen 6.
II. Nach dem Verstreichen und/oder Vibrieren der Masse 7 folgt der erste (chemische) Aushärtevorgang (symbolische Zeitdarstellung 12) in waagerechter Lage.
III. Die Bodenfliese wird nach dem ersten Aushärtevorgang aus der Waagerechten aufgestellt, z.B. in eine senkrechte Lage gebracht, und die Trennplatte 5 wird abgezogen (14).
IV. Zweiter Aushärtevorgang in senkrechter Lage (symbolische Zeitdarstellung 13).
V. Die fertig ausgehärtete Bodenfliese wird wenigstens an einer Seite, gegebenenfalls aber auch beidseitig geschliffen (ohne Beschädigung der allfälligen Reliefs).
VI. Imprägnierung der Bodenfliese mit Firnis, Lack Öl, Kunstharz oder dergleichen.

Die Arbeitsschritte V. und VI. können gegebenenfalls auch vertauscht werden.

Fig.10 zeigt eine bevorzugte Variante zur Fig.7, die mit nur einer elastischen Trennmatte auskommt. Der obere, perforierte Teil der Vakuumsaugplattenvorrichtung ist mit einer Gummiplatte 19, die gegebenenfalls gleichzeitig als Trennmatte dient, und einem strichpunktiert dargestellten Rahmen 6 belegt. Die hohle Platte 1, an deren Unterseite ein luftdichter - nicht dargestellter - Raum mit einem Vakuumanschluss und Absperrventil ausgebildet ist, so dass man die Platte unter Vakuum über Strecken unabhängig von einer Vakuumquelle transportieren kann, enthält gleichmässig über die ganze Fläche verteilt siebartige, nur symbolisch dargestellte Bohrungen 3. Auf der Unterseite der Platte wird nun ein Vakuum 4 erzeugt. Ein Gegenstand, z.B. eine Glasplatte oder der Rahmen 6, kann dadurch angesaugt werden.

Zum Giessen der Plattenelemente darf nur der Rahmen 6 angesaugt werden. Zu diesem Zweck wird eine Gummiplatte 19 auf die Metallplatte 1, die auch aus einem anderen formbeständigen Material aufgebaut sein kann, aufgelegt. Diese Gummiplatte verfügt über eine durchgehende Aussparung (oben und unten dargestellt) oder eine Lochung, welch beide etwas schmäler ausgeführt sind als der Rahmen 6, die die darunterliegenden Perforierungen jedoch freigibt. Dadurch ergibt sich für den Rahmen 6 an den nicht ausgenommenen Stellen rundherum eine Auflagefläche. Aus dem Innern der Haltevorrichtung werden die Gummiplatte 19 und ebenso der Rahmen 6, der obenauf liegt, dichtend angesaugt. Das Füllmaterial 7 kann eingegossen werden. Eventuell kann zwischen Gummimatte 19 und Füllmasse 7 noch eine zusätzliche Trennmatte eingelegt werden, was bevorzugt ist, wenn viele Rahmen gleichzeitig aufliegen. Die Trennmatte ist dann bevorzugt nur eine dünne, billige Kunststoffolie.

Die gezeigte Matte 19 könnte auch im Bereich der Füllung über Reliefs verfügen. Bei einer Bodenfliese nach Fig.6 können Reliefs durch Stempeleindruck o.dgl. in noch teigigem Zustand der Füllung 7 an deren Oberseite angebracht werden.

## Patentansprüche

1. Bodenfliese (1), die aus einem Rahmen (2,20,21) und einer Füllung (3) besteht, die im Gebrauchszustand unlösbar zu einem einstückigen Teil verbunden sind, und wobei der Rahmen (2) und die Füllung (3) aus unterschiedlichen Materialien bestehen,**dadurch gekennzeichnet, dass** der Rahmen (20,21) sich in der Ebene derBodenfliese erstreckt bzw. unter Ausschluss eines senkrecht zur Ebene der Bodenfliese angeordneten Rahmens, insbesondere aus Metallblech und - im Querschnitt gesehen - auf der der Füllung (3) zugekehrten Seite eine - vorzugsweise halbkreis- oder dreiecksförmige - Vertiefung (40,41), in die die Füllung (3) eindringt, oder eine Erhöhung aufweist, die in die Füllung (3) ragt.

2. Bodenfliese nach Anspruch 1, **dadurch gekennzeichnet, dass** die Füllung (3) aus aushärtbaren Massen, insbesondere aus Beton, Kunststoff, Holzbeton, Steinholz, Gips oder Sorelzement gebildet ist und ihr vorzugsweise ein Farbstoff beigemischt ist.

3. Bodenfliese nach einem der vorangehenden Ansprüche, **dadurch gekennzeichnet, dass** die Füllung (3) über ihre ganze Fläche von einem Gitter (7) verstärkt ist, das vorzugsweise zwischen den Teilen eines sandwichartig aufgebauten Rahmens eingeklemmt ist.

4. Bodenfliese nach einem der vorhergehenden Ansprüche, **dadurch gekennzeichnet, dass** der Rahmen aus Holz, Metall, Kunststoff oder Stein besteht und vorzugsweise, z.B. mit Schellack, imprägniert ist.

5. Bodenfliese nach einem der vorangehenden Ansprüche, **dadurch gekennzeichnet, dass** als Füllstoff eine Mischung der folgenden Ingredienzien vorgesehen ist:
- 0-60, vorzugsweise 15-30 Gew.% Holzspäne oder andere organische natürliche Materialien mit einer Spanlänge von etwa 0.1-3.0 mm;
- 10-60, vorzugsweise 30-60 Gew.% anorganische Füllstoffe, z.B. Steinmehle, Sande, Mineralmehle, Metallpulver o.dgl.;
- etwa 0-18 Gew.% Pigmente und/oder etwa 2-40, vorzugsweise 10-30 Gew.% Quellstoff, z.B. säureaktivierter Bentonit;
- gegebenenfalls wenigstens eine der folgenden Komponenten: etwa 0.01-1 Gew.% feingepulvertes Kasein o.dgl., z.B. Laab- und/oder Säurekasein; etwa 0.01-1 Gew.% Ölphosphate; etwa 0.01-3 Gew.% Öl, vorzugsweise Leinöl, angerührt mit ca. 30 Gew.% Kalziumhydroxid.

6. Verfahren zur Herstellung einer Bodenfliese nach einem der vorangegangenen Ansprüche, **dadurch gekennzeichnet, dass** auf eine Liegefläche ein Trennmittel, insbesondere eine Trennmatte (5) aufgebracht wird, dass darauf ein eine Fläche umschreibender Rahmen (2,6) aufgelegt wird, in den das die Füllung (3) bildende Material in flüssigem bis teigigem Zustand eingefüllt und planiert und/oder vibriert, anschliessend vom Trennmittel befreit und schliesslich aushärten gelassen wird, wobei sich die Bodenfliese während einer ersten Phase der Aushärtung (12), d.h. bis zur Erreichung einer Eigenstabilität des Füllmaterials (7), in annähernd waagerechter Lage befindet und danach für eine zweite Aushärtungsphase (13) in annähernd senkrechte Lage gebracht wird.

7. Verfahren nach Anspruch 6 , **dadurch gekennzeichnet, dass** während des Aushärtevorgangs bzw. während des Trocknens beide Seiten der Füllung (7) mit Luft möglichst gleichmässig umspült werden.

8. Verfahren nach Anspruch 6 oder 7, **dadurch gekennzeichnet, dass** das Bauelement vor oder nach dem zweiten Aushärten (13) mit oberflächenverbessernden Mitteln imprägniert und/oder an wenigstens einer Seite geschliffen wird.

9. Verfahren nach einem der Ansprüche 6 bis 8, **dadurch gekennzeichnet, dass** zum Halten des Rahmens (2,6) und einer Trennmatte (19) diese durch ein im Innern einer hohlen Haltevorrichtung erzeugtes Vakuum durch Bohrungen angesogen werden, wobei vorzugsweise eine elastische Matte als Dichthilfsmittel eingesetzt wird.

## Claims

1. Flooring tile (1), consisting of a frame (2, 20, 21) and a filling (3) which in the state of use are inseparably bonded into one piece and where the frame (2) and filling (3) consist of different materials, **characterized in that** the frame (20, 21) extends in the plane of the flooring tile respectively, excluding a frame, particularly of metal sheet, arranged in a direction normal to the plane of the flooring tile, possesses on the side facing the filling (3) - as seen in section - a recess (40, 41), preferably semicircular or triangular, into which the filling (3) enters, or a projection which penetrates into the filling (3).

2. Flooring tile according to claim 1, **characterized in that** the filling (3) is formed of curable masses, particularly of concrete, synthetic material, wood cement, xylolith, plaster or Sorel cement, and a colorant is preferably admixed to it.

3. Flooring tile according to one of the preceding claims, **characterized in that** the filling (3) over its full area is reinforced by a grid (7) which preferably is clamped between the parts of a frame of sandwich-type design.

4. Flooring tile according to one of the preceding claims, **characterized in that** the frame consists of wood, metal, synthetic material or stone, and preferably is impregnated, for instance with shellac.

5. Flooring tile according to one of the preceding claims, **characterized in that** as a filler a mixture of the following ingredients is provided:
- 0 to 60, preferably 15 to 30 weight percent of wood chips or other natural organic materials having a chip length of about 0.1 to 3.0 mm;
- 10 to 60, preferably 30 to 60 weight percent of inorganic filllers, for instance rock flours, sands, mineral flours, metal powders or the like;
- about 0 to 18 weight percent of pigments and/or about 2 to 40, preferably 10 to 30 weight percent of a thickening agent, for instance acid-activated bentonite;
- eventually at least one of the following components: about 0.01 to 1 weight percent of finely powdered casein or the like, for instance rennet casein and/or acid casein; about 0.01 to 1 weight percent of oil phosphates; about 0.01 to 3 weight percent of oil, preferably linseed oil, slurried with about 30 weight percent of calcium hydroxide.

6. Method for the production of a flooring tile according to one of the preceding claims, **characterized in that** a release agent, particularly a release mat (5), is applied to a bearing area, that a frame (2, 6) is placed thereon which circumscribes an area and into which the material forming the filling (3) is filled in a liquid to pasty condition, is made level and/or vibrated, then freed from the release agent, and finally allowed to cure, while the flooring tile during a first curing phase (12), that is, until the filling material (7) has attained inherent stability, is in an approximately horizontal position and is then brought into an approximately vertical position for a second curing phase (13).

7. Method according to claim 6, **characterized in that** during the curing process or during drying, both sides of the filling (7) are exposed to an air flow that is as uniform as possible.

8. Method according to claim 6 or 7, **characterized in that** the structural element prior to or following the second curing (13) is impregnated with surface finishing agents and/or is polished on at least one side.

9. Method according to one of the claims 6 to 8, **characterized in that** the frame (2, 6) and a separating mat (19) in order to be held are sucked up via holes by a vacuum generated in the interior of a hollow holding device, an elastic mat preferably being employed as a sealing aid.

## Revendications

1. Carrelage (1), formé d'un cadre (2,20,21) et d'un remplissage (3), relié de façon indésolidarisable pour donner à l'état d'utilisation une pièce monobloc, le cadre (1) et le remplissage (3) étant formés de matériaux différents, **caractérisé en ce que** le cadre (20,21) s'étend dans le plan du carrelage, respectivement en excluant un cadre disposé perpendiculairement au plan du carrelage, en particulier en pôle métallique et - en observant en coupe - sur la face, tournée vers le remplissage (3), présente un creusement (40,41) - de préférence en forme de demi-cercle ou de triangle - dans lequel pénètre le remplissage (3) ou bien un relief pénétrant dans le remplissage (3).

2. Carrelage selon la revendication 1, **caractérisé en ce que** le remplissage (3) est formé de masses durcissables, en particulier de béton en matière synthétique, béton de bois, xylolithe, plâtre, ciment Sorel, et un colorant lui étant de préférence ajouté en mélange.

3. Carrelage selon l'une des revendications précédentes, **caractérisé en ce que** le remplissage (3) est renforcé sur toute sa surface par un grillage (7) enserré de préférence entre les parties d'un cadre construit à la façon d'un sandwich.

4. Carrelage selon l'une des revendications précédentes, **caractérisé en ce que** le cadre est formé en bois, métal, matière synthétique ou pierre et, de préférence, est imprégné de gomme-laque.

5. Carrelage selon l'une des revendications précédentes, **caractérisé en ce qu'**est prévu comme charge un mélange des ingrédients suivants :
- 0 à 60, de préférence 15 à 30 % en poids de copeaux de bois ou bien d'autres matériaux naturels organiques ayant une longueur de copeaux d'environ 0,1 à 3,0 mm ;
- 10 à 60, de préférence 30 à 60 % en poids de charges non organiques, par exemple des poudres minérales fines de roche, des sables, des farines minérales, de la poudre métallique ou analogue ;
- environ 0 à 18 % de pigments et/ou environ 2 à 40, de préférence 10 à 30 % en poids d'agent gonflant, par exemple de la bentonite activée à l'acide ;
- le cas échéant au moins l'un des composants suivantes : environ 0,01 à 1 % en poids de caséine finement pulvérisée ou analogue, par exemple de la caséine de présure et/ou acide ; environ 0,01 à 1 % en poids de phosphate d'huile ; environ 0,01 à 3 % en poids d'huile, de préférence d'huile de lin, mélangée avec agitation à environ 30 % en poids d'hydroxyde de calcium.

6. Procédé de fabrication d'un carrelage selon l'une des revendications précédentes, **caractérisé en ce que**, sur une surface de pose est appliqué un agent séparateur, en particulier un matelas séparateur (5), **en ce qu'**ensuite on pose un cadre (2,6) circonscrivant une surface, cadre dans lequel le matériau formant le remplissage (3) est introduit, à l'état liquide jusqu'à pâteux, et aplani et/ou vibré, l'agent séparateur étant ensuite éliminé et, enfin, le produit étant laissé durcir, le carrelage, pendant une première phase de durcissement (12), c'est-à-dire jusqu'à l'atteinte d'une stabilité propre de la part du matériau de remplissage (7), se trouvant en une position à peu près horizontale, puis étant placé en une position à peu près verticale, pour une deuxième phase de durcissement (13).

7. Procédé selon la revendication 6, **caractérisé en ce que**, pendant le processus de durcissement ou pendant le séchage, les deux faces du remplissage (7) sont exposées à une circulation d'air aussi régulière que possible.

8. Procédé selon la revendication 6 ou 7, **caractérisé en ce que** l'élément de construction, avant ou après le deuxième durcissement (13), est imprégné d'agent améliorateur de surface et/ou meulé sur au moins une face.

9. Procédé selon l'une des revendications 6 à 8, **caractérisé en ce que**, pour tenir le cadre (2,6) et un matelas séparateur (19), ceux-ci sont plaqués par aspiration par un vide, généré à l'intérieur d'un dispositif de maintien creux et amené par des perçages, de préférence un matelas élastique étant utilisé comme moyens auxiliaires d'étanchéité.
